# EUROPÄISCHE PATENTSCHRIFT

(11) **EP 3 205 761 B1**
(45) Veröffentlichungstag und Bekanntmachung des Hinweises auf die Patenterteilung: **15.12.2021**
(21) Anmeldenummer: 16154976.1
(22) Anmeldetag: 10.02.2016
(51) Int. Cl.: D04B 27/08

(54) **KETTENWIRKMASCHINE**
WARP KNITTING MACHINE
MÉTIER À TRICOTER À CHAÎNE

(43) Veröffentlichungstag der Anmeldung: 16.08.2017
(73) Patentinhaber: KARL MAYER STOLL R&D GmbH, 63179 Obertshausen (DE)
(72) Erfinder: Flick, Oliver, 63150 Heusenstamm (DE); Hohmann, Steffen, 55116 Mainz (DE); Blumör, Joachim, 63512 Hainburg (DE); Zang, Claus-Peter, 64832 Babenhausen (DE); Grob, Thomas, 63179 Obertshausen (DE)
(74) Vertreter: Keil & Schaafhausen Patentanwälte PartGmbB

(56) Entgegenhaltungen:
- EP-A1- 1 837 428
- EP-A1- 2 014 811
- DE-A1-102012 000 309
- GB-A- 844 012

## Beschreibung

Die Erfindung betrifft eine Kettenwirkmaschine mit einer Hauptwelle und einem Hauptwellenantrieb, der einen Antriebsmotor aufweist, wobei die Hauptwelle mindestens eine Barrenanordnung ansteuert, wobei der Antriebsmotor koaxial mit der Hauptwelle angeordnet ist.

Eine Kettenwirkmaschine, die als Raschelmaschine ausgebildet ist, ist aus GB 844 012 A bekannt. Eine Motorwelle ist mit der Hauptwelle über eine Kupplung verbunden.

DE 10 2012 000 309 A1 zeigt eine Wirkmaschine zum Abarbeiten von mindestens zwei Warenbahnen, bei der ein Hauptantrieb eine Hauptwelle antreibt, die in zwei Abschnitte unterteilt ist. Die beiden Abschnitte sind mit dem Hauptwellenantrieb über lösbare Hauptwellenkupplungen verbunden.

EP 1 837 428 A1 zeigt eine Schwingungssteuereinrichtung für Legebarren einer Kettenwirkmaschine. Diese weist einen zentralen Motor auf, der auf eine Hauptwelle wirkt. Die Legebarren werden zusätzlich von einem eigenen Motor angetrieben.

Im Betrieb der Kettenwirkmaschine wird die Hauptwelle gedreht und treibt beispielsweise über einen Kurbeltrieb mindestens eine Barre, in der Regel aber mehrere Barren an, wobei an den Barren Wirkwerkzeuge befestigt sind. Der Kurbeltrieb kann über die Länge der Barren verteilt mehrere Abschnitte aufweisen.

Der bekannte Antriebsmotor ist dabei seitlich neben der Hauptwelle angeordnet, d.h. die Rotationsachse des Antriebsmotors verläuft parallel zur Rotationsachse der Hauptwelle. Eine drehmomentübertragende Verbindung zwischen dem Antriebsmotor und der Hauptwelle erfolgt über Riemen oder Ketten. Die seitliche Anbindung über eine Motorwippe ist schwingungsanfällig und maschinendynamisch ungünstig. Daraus folgt bei einfachen Konstruktionen eine Begrenzung der Arbeitsgeschwindigkeit der Kettenwirkmaschine. Wenn man höhere Arbeitsgeschwindigkeiten erzielen möchte, wird die Konstruktion aufwändiger und damit teurer.

Der Erfindung liegt die Aufgabe zugrunde, hohe Arbeitsgeschwindigkeiten bei einfachem Aufbau zu ermöglichen.

Diese Aufgabe wird bei einer Kettenwirkmaschine der eingangs genannten Art mit den Merkmalen des Anspruchs 1 dadurch gelöst.

In diesem Fall kann man eine seitliche Belastung zwischen der Hauptwelle und dem Antriebsmotor, wie sie beispielsweise bei einem Antrieb über Riemen oder Ketten auftreten, vermeiden. Damit bleibt die Belastung der Lager der Welle des Antriebsmotors und der Hauptwelle gering. Die Lebensdauer wird vergrößert. Der Platzbedarf kann verringert werden.

Seitlich neben der Hauptwelle ist kein Bauraum für den Antriebsmotor erforderlich, so dass hier gegebenenfalls andere Hilfsaggregate der Kettenwirkmaschine untergebracht werden können. Die Anbindung des Antriebsmotors ist durch die Positionierung auf der Hauptwellenachse maschinendynamisch günstig. Die Ansteuerung der Barrenanordnung kann beispielsweise über einen Kurbeltrieb erfolgen. Die Kettenwirkmaschine lässt sich gezielt mit unterschiedlichen Drehzahlen betreiben.

Der Antriebsmotor weist einen Rotor auf, der auf der Hauptwelle montiert ist. Damit wird eine unmittelbare, direkte und starre Verbindung zwischen dem Antriebsmotor und der Hauptwelle auf einfache Weise realisiert.

Der Antriebsmotor ist direkt mit der Hauptwelle verbunden. Eine direkte Verbindung bedeutet, dass der Antriebsmotor ohne Übersetzung mit der Hauptwelle verbunden ist. Die Drehzahl des Antriebsmotors wird also 1:1 auf die Hauptwelle übertragen. Der Antriebsmotor kann dabei auch über eine flexible Kupplung mit der Hauptwelle verbunden sein, beispielsweise einer Kupplung, die drehsteif und biegeweich ist. Eine derartige Kupplung kann z.B. durch eine Balgkupplung realisiert werden.

Der Antriebsmotor ist starr mit der Hauptwelle verbunden. Zwischen dem Antriebsmotor und der Hauptwelle sind also keine beweglichen Teile vorhanden, die verschleißen können.

In einer bevorzugten Ausgestaltung ist vorgesehen, dass die Hauptwelle in einem Gehäuse angeordnet ist und der Antriebsmotor an einer Stirnseite des Gehäuses befestigt ist. Das Gehäuse kann auch als "Maschinenbett" bezeichnet werden. Das Gehäuse dient dann gleichzeitig als Lagerort für den Antriebsmotor. Da das Gehäuse die Position der Hauptwelle festlegt, kann man durch eine Festlegung des Antriebsmotors an der Stirnseite des Gehäuses eine sehr genaue Ausrichtung zwischen dem Antriebsmotor und der Hauptwelle erreichen.

Hier wird bevorzugt, dass die Antriebswelle die Stirnseite durchragt. In diesem Fall kann man im Inneren des Gehäuses beispielsweise einen Ölumlauf oder andere Möglichkeiten für die Schmierung der Lager der Hauptwelle vorsehen, während der Antriebsmotor auf der anderen Seite der Stirnseite einer anderen Umgebung ausgesetzt werden kann. Der Maschinenrahmen oder das Gehäuse der Antriebswelle wird im Kopfteilbereich, also dort, wo der Antriebsmotor befestigt ist, leichter, was sich ebenfalls maschinendynamisch günstig auswirkt.

In einer alternativen Ausgestaltung ist vorteilhafterweise vorgesehen, dass der Antriebsmotor inmitten der Längserstreckung der Hauptwelle angeordnet ist. Die Hauptwelle kann beispielsweise zwei Abschnitte aufweisen, die sich dann beidseits des Motors erstrecken. Dies hat den Vorteil, dass die beiden Abschnitte der Hauptwelle symmetrisch angesteuert werden. Die Abschnitte sind vorzugsweise gleichlang ausgebildet. Eine derartige Anordnung wird auch als "Mittenantrieb" bezeichnet.

Bevorzugterweise ist der Antriebsmotor als lagerloser Motor ausgebildet. Eine Lagerung des Rotors erfolgt also nicht im Inneren des Motors, sondern außerhalb, beispielsweise über die Hauptwelle. Ein lagerloser Motor baut sehr klein und ist wartungsfrei. Lager, die außerhalb des Motors angeordnet sind, sind leichter zugänglich.

Vorzugsweise tritt die Hauptwelle an einem axialen Ende in den Antriebsmotor ein und ragt mit einem freien Ende am anderen Ende aus dem Antriebsmotor heraus. So hat in einer bevorzugten Ausgestaltung der Rotor eine Durchgangsbohrung, so dass die Hauptwelle auf beiden Seiten des Motors herausragt und sich ein Motor mit zwei Wellenenden ergibt.

Hierbei wird bevorzugt, dass ein Drehgeber am freien Ende angeordnet ist. Der Drehgeber kann also die Drehzahl und / oder die Drehposition der Hauptwelle unmittelbar erfassen, ohne dass man durch räumliche Gegebenheiten in der Positionierung des Drehgebers wesentlich eingeschränkt ist.

Hierbei ist bevorzugt, dass der Drehgeber als berührungsloser Drehgeber ausgebildet ist. Damit ergeben sich bei dem Drehgeber keine Verschleißteile, die gewartet werden müssen.

Alternativ dazu ist in einer vorteilhaften Ausgestaltung vorgesehen, dass der Antriebsmotor ein sensorlos geregelter Motor ist. In diesem Fall sind Drehgeber entbehrlich.

In einer bevorzugten Ausgestaltung ist vorgesehen, dass das freie Ende mit einem Mustergetriebe in Antriebsverbindung steht. Dadurch ist eine gute Zugänglichkeit zur Verbindung der Hauptwelle und dem Mustergetriebe gegeben. Dadurch werden Wartungs- oder Einstellarbeiten, beispielsweise für Tempiwechsel, erleichtert. Die Hauptwelle bewirkt eine Bewegung von Barren der Wirkmaschine quer zu ihrer Längserstreckung. Mindestens eine Barre muss sich jedoch zusätzlich parallel zu ihrer Längserstreckung bewegen können. Dies ist in der Regel eine so genannte Legebarre. Die Bewegung parallel zur Längserstreckung der Barre, eine so genannte "Versatzbewegung" wird durch das Mustergetriebe gesteuert. Wenn das Mustergetriebe unmittelbar durch die Hauptwelle angetrieben wird, dann kann man auf einfache Weise eine synchrone Abstimmung der Versatzbewegung auf andere Bewegungen in der Kettenwirkmaschine erreichen, die durch die Hauptwelle bewegt werden.

Hierbei ist bevorzugt, dass das freie Ende über einen Zahnriemen oder eine Kette mit dem Mustergetriebe verbunden ist. Dadurch ist zwar eine kleine seitliche Belastung der Hauptwelle möglich. Da das Mustergetriebe aber eine wesentlich kleinere Antriebsleistung benötigt als die Hauptwelle an sich, ist diese Belastung noch tolerierbar.

Vorzugsweise weist der Antriebsmotor eine Flüssigkeitskühlung, insbesondere eine Ölkühlung auf. Dies verhindert auch bei längerem Betrieb in kleinen Drehzahlen, beispielsweise im Kriechgang, ein Überhitzen des Motors.

Bevorzugterweise weist die Hauptwelle mindestens einen ersten als Arbeitsabschnitt ausgebildeten Abschnitt und einen zweiten als Endwelle ausgebildeten Abschnitt auf, wobei der Antriebsmotor mit der Endwelle verbunden ist. Der Arbeitsabschnitt und die Endwelle können getrennt voneinander gehandhabt und montiert werden. Bei der Montage werden die Endwelle und der Arbeitsabschnitt dann zusammengesetzt und miteinander verbunden. Dies erleichtert die Montage.

Vorzugsweise ist der Antriebsmotor als elektrischer Drehfeldmotor ausgebildet.

Die Erfindung wird im Folgenden anhand eines bevorzugten Ausführungsbeispiels in Verbindung mit der Zeichnung beschrieben.

Hierin zeigen:
- Fig. 1: einen Horizontalschnitt durch ein Maschinenbett einer Kettenwirkmaschine im Ausschnitt,
- Fig. 2: einen Längsschnitt durch einen Antriebsmotor,
- Fig. 3: eine Stirnseitenansicht der Kettenwirkmaschine und

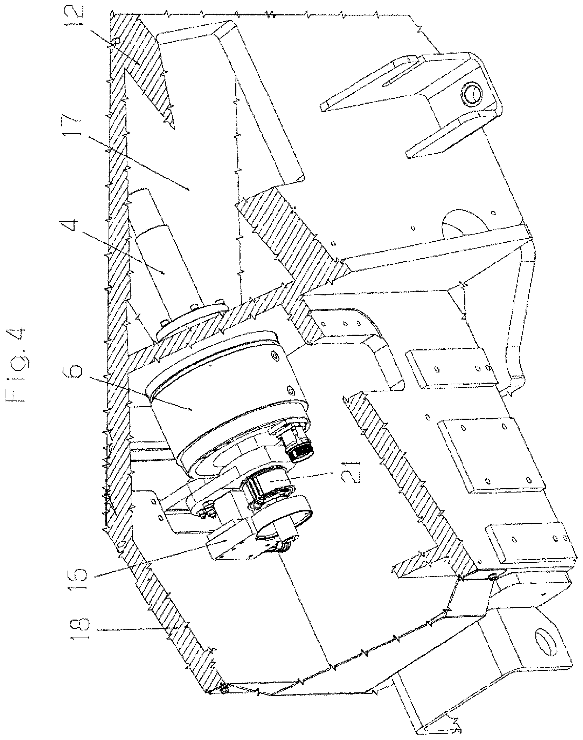

- Fig. 4: eine perspektivische Ansicht der Kettenwirkmaschine im Bereich des Antriebsmotors mit teilweise weggebrochenen Teilen.

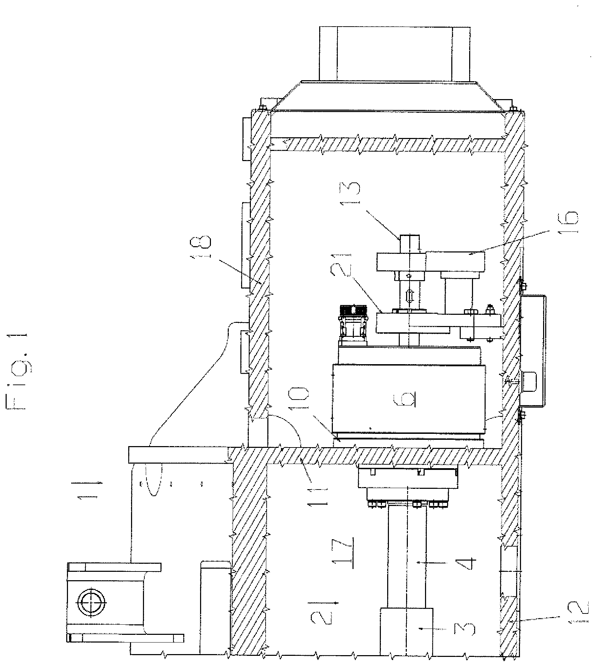

Fig. 1 zeigt ein Ende einer Kettenwirkmaschine 1 im Schnitt von oben.

Die Kettenwirkmaschine 1 weist eine Hauptwelle 2 auf, die einen als Arbeitsabschnitt 3 ausgebildeten ersten Abschnitt und einen als Endwelle 4 ausgebildeten zweiten Abschnitt aufweist. Am Arbeitsabschnitt 3 sind in nicht näher dargestellter Weise Kurbeltriebe befestigt, die zum Antrieb von Barren dienen, wobei die Barren in bekannter Weise Wirkwerkzeuge tragen.

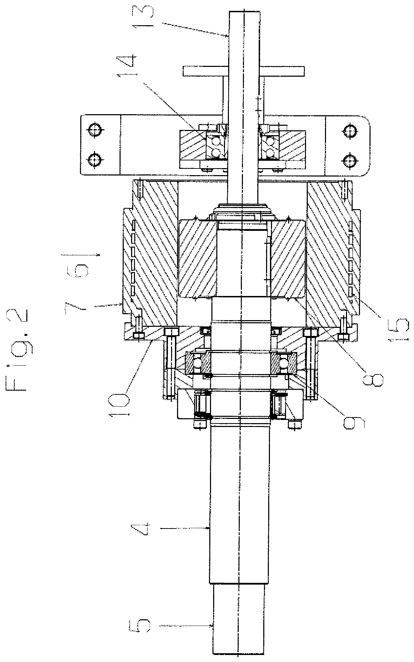

Der Arbeitsabschnitt 3 und die Endwelle 4 sind starr, aber lösbar miteinander verbunden. Wie aus Fig. 2 ersichtlich ist, weist die Endwelle 4 hierzu einen

Der Arbeitsabschnitt 3 und die Endwelle 4 sind starr, aber lösbar miteinander verbunden. Wie aus Fig. 2 ersichtlich ist, weist die Endwelle 4 hierzu einen Abschnitt 5 mit vermindertem Durchmesser auf, der in den Arbeitsabschnitt 3 der Hauptwelle 2 eingeführt und dann mit dem Arbeitsabschnitt 3 verbunden werden kann.

Die Kettenwirkmaschine 1 weist weiterhin einen Antriebsmotor 6 auf, der koaxial mit der Antriebswelle 2 angeordnet ist. Der Antriebsmotor 6 ist direkt mit der Hauptwelle 2 verbunden, wobei diese Verbindung vorzugsweise eine starre Verbindung ist. Alternativ dazu kann der Antriebsmotor 6 auch über eine flexible Kupplung mit der Hauptwelle 2 verbunden sein, wobei die flexible Kupplung drehsteif und biegeweich ist. Eine derartige Kupplung kann beispielsweise durch eine Balgkupplung realisiert werden.

Fig. 2 zeigt eine besonders bevorzugte Ausgestaltung im Schnitt. Die Endwelle 4 ist hierbei durch den Antriebsmotor 6 hindurch geführt. Der Antriebsmotor 6 weist einen Stator 7 und einen Rotor 8 auf. Der Rotor 8 ist auf der Endwelle 4 montiert, d.h. auf die Endwelle 4 aufgesetzt und mit der Endwelle 4 drehfest verbunden. Die Drehung des Rotors 8 überträgt sich also ohne weitere Zwischenglieder direkt und starr auf die Endwelle 4 und damit auf die Hauptwelle 2.

Der Motor 6 ist lagerlos ausgebildet. Die Lagerung des Rotors 8 im Stator 7 erfolgt über eine Lagerung der Endwelle 4 in einem Lager 9, das außerhalb des Antriebsmotors 6 angeordnet ist. Dieses Lager 9 befindet sich in einem Flansch 10, der wiederum in einer Stirnseite 11 eines Gehäuses 12 befestigt ist, wobei das Gehäuse 12 zur Aufnahme der Hauptwelle 2 dient. Mit anderen Worten ist die Hauptwelle 2 in dem Gehäuse 12 angeordnet und der Antriebsmotor ist an der Stirnseite 11 des Gehäuses 12 befestigt. Damit ragt die Endwelle 4 durch die Stirnseite 11 hindurch. Das Gehäuse 12 kann auch als Maschinenbett bezeichnet werden.

Wie man in Fig. 2 erkennen kann, tritt die Hauptwelle 2, genauer gesagt die Endwelle 4, an einem axialen Ende in den Antriebsmotor 6 ein und ragt mit einem freien Ende 13 aus dem Antriebsmotor 6 heraus. Das freie Ende 13 kann in einem weiteren Lager 14 gelagert sein. Die Notwendigkeit, das zweite Lager 14 vorzusehen, richtet sich nach den Anforderungen im Betrieb der Kettenwirkmaschine 1.

Wenn die Hauptwelle 2 den Antriebsmotor 6 durchragt, ist es auch möglich, den Antriebsmotor 6 inmitten der axialen Erstreckung, d.h. inmitten der axialen Länge der Hauptwelle 2 anzuordnen. Eine derartige Anordnung wird auch als "Mittenantrieb" bezeichnet. Dies hat den Vorteil, dass die auf beiden Seiten des Antriebsmotors 6 befindlichen Abschnitte der Hauptwelle 2 symmetrisch angesteuert werden können.

Der Stator 7 des Antriebsmotors 6 weist schraubenlinienförmige Kanäle 15 auf, durch die eine Kühlflüssigkeit, beispielsweise Öl, geleitet werden kann. Anschlüsse für die Kühlflüssigkeit sind aus Gründen der Übersicht in Fig. 1 nicht dargestellt. Sie können sich beispielsweise unter dem Antriebsmotor 6 befinden, d.h. hinter der in Fig. 1 dargestellten Zeichenebene.

Am freien Ende 13 der Endwelle 4 ist ein Drehgeber 16 angeordnet. Der Drehgeber 16 ist als Absolutdrehgeber ausgebildet, d.h. er kann die Winkelposition der Hauptwelle 2 absolut bestimmen. Hierzu kann beispielsweise auf dem freien Ende 13 eine magnetische oder optische Codierung vorgesehen sein, die vom Drehgeber 16 erfasst werden kann. Der Drehgeber 16 ist vorzugsweise ein berührungsloser Drehgeber.

Wenn man einen sensorlos geregelten Motor verwendet, ist der Drehgeber 16 für die Regelung des Antriebsmotors 6 entbehrlich. Es kann allerdings günstig sein, dennoch einen Drehgeber 16 zu verwenden, um beispielsweise Bewegungen von Wirkwerkzeugen geregelt aufeinander abstimmen zu können.

Die Stirnseite 11, die auch als Stirnwand bezeichnet werden kann, trennt einen Arbeitsraum 17 des Gehäuses 12 von einem Kopfteil 18. Im Arbeitsraum 17 kann beispielsweise ein Ölsumpf zur Schmierung der Lager der Hauptwelle 2 vorgesehen sein. Im Kopfteil 18 ist ein derartiger Ölsumpf nicht erforderlich.

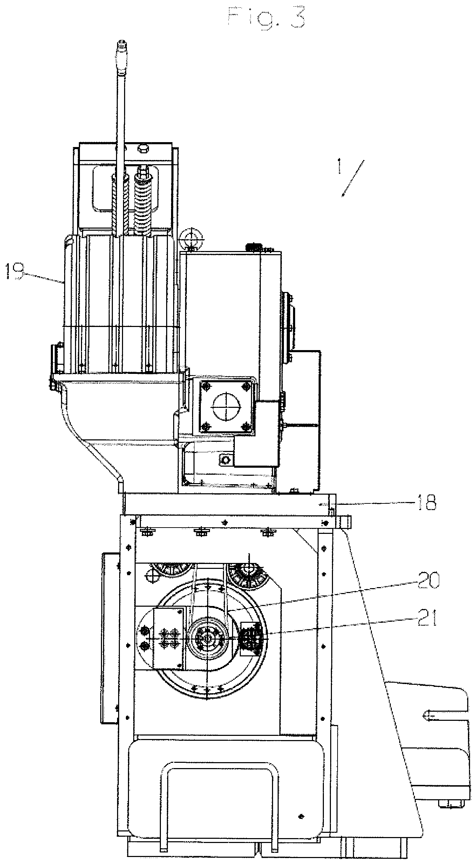

Wie man anhand von Fig. 3 erkennen kann, ist auf dem Kopfteil 18 ein Mustergetriebe 19 angeordnet. Das Mustergetriebe 19 dient zur Erzeugung einer Versatzbewegung von einer oder mehrerer Legebarren. Die Versatzbewegung erfolgt dabei in Richtung der Längserstreckung der Legebarren. Die Hauptwelle 2 ist hierbei durch einen Riemen 20, der über eine Riemenscheibe 21 geführt ist, mit dem Mustergetriebe 19 verbunden. Die Riemenscheibe 21 ist auf dem freien Ende 13 der Endwelle 4 drehfest angeordnet. Anstelle eines Riemens kann auch eine Kette vorgesehen sein. Der Riemen kann beispielsweise als Zahnriemen ausgebildet sein.

Der Antriebsmotor 6 ist als drehzahlgesteuerter Motor ausgebildet, insbesondere als elektrischer Drehfeldmotor. Besonders bevorzugt ist hierbei ein Synchronmotor, der über einen Umrichter angetrieben wird, um die gewünschte Drehzahl einstellen zu können.

Mit der beschriebenen Konstruktion sind nur wenige Elemente erforderlich, um den Antriebsmotor 6 mit der Hauptwelle 2 zu verbinden. Der Antriebsmotor 6 ist direkt und starr mit der Hauptwelle 2 verbunden, indem der Rotor 8 des Antriebsmotors 6 direkt auf der Endwelle 4 der Hauptwelle 2 montiert ist. Der Antriebsmotor 6 ist an der Stirnwand 11 des Gehäuses 12 angeflanscht und damit sehr stabil gelagert. Das Risiko, dass sich Schwingungen ausbilden, wird dadurch klein gehalten.

Da der Antriebsmotor 6 lagerlos ausgebildet ist, kann er klein und leicht gehalten werden. Die Anbindung des Antriebsmotors 6 ist durch die Positionierung auf der Achse der Hauptwelle 2 maschinendynamisch günstig. Der Maschinenrahmen wird im Bereich des Kopfteils 18 relativ leicht, was sich ebenfalls maschinendynamisch auswirkt. Es sind nur relativ wenige Teile erforderlich. Der Antriebsmotor 6 ist praktisch wartungsfrei.

Durch das freie Ende 13 der Hauptwelle 2 ergibt sich eine gute Zugänglichkeit zum Antrieb des Mustergetriebes 19. Damit wird die Wartung vereinfacht und auch der Wechsel einer Antriebsscheibe, beispielsweise der Riemenscheibe 21, wird erleichtert. Ein derartiger Wechsel ist beispielsweise erforderlich, wenn die Geschwindigkeit des Mustergetriebes verändert werden soll. Dadurch, dass der Antriebsmotor 6 auf der Achse der Hauptwelle 2 angeordnet ist, ergeben sich durch die Verbindung zwischen der Hauptwelle 2 und dem Antriebsmotor 3 praktisch keine Radialkräfte, die aufgefangen werden müssen. Die entsprechenden Lager können also kostengünstig dimensioniert werden.

## Patentansprüche

1. Kettenwirkmaschine (1) mit einer Hauptwelle (2) und einem Hauptwellenantrieb, der einen Antriebsmotor (6) aufweist, wobei die Hauptwelle (2) mindestens eine Barrenanordnung ansteuert, wobei der Antriebsmotor (6) koaxial mit der Hauptwelle (2) angeordnet ist, **dadurch gekennzeichnet, dass** der Antriebsmotor (6) als drehzahlgesteuerter Motor ausgebildet ist, wobei der Antriebsmotor (6) einen Rotor (8) aufweist, der auf der Hauptwelle (2) montiert ist.

2. Kettenwirkmaschine nach Anspruch 1, **dadurch gekennzeichnet, dass** die Hauptwelle (2) in einem Gehäuse (12) angeordnet ist und der Antriebsmotor (6) an einer Stirnseite (11) des Gehäuses (12) befestigt ist.

3. Kettenwirkmaschine nach Anspruch 1 oder 2, **dadurch gekennzeichnet, dass** der Antriebsmotor (6) inmitten der Längserstreckung der Hauptwelle (2) angeordnet ist.

4. Kettenwirkmaschine nach einem der Ansprüche 1 bis 3, **dadurch gekennzeichnet, dass** der Antriebsmotor (6) als lagerloser Motor ausgebildet ist.

5. Kettenwirkmaschine nach einem der Ansprüche 1 bis 4, **dadurch gekennzeichnet, dass** der Antriebsmotor (6) ein sensorlos geregelter Motor ist.

6. Kettenwirkmaschine nach einem der Ansprüche 1 bis 5, **dadurch gekennzeichnet, dass** die Hauptwelle (2) an einem axialen Ende in den Antriebsmotor (6) eintritt und mit einem freien Ende (13) am anderen Ende aus dem Antriebsmotor (6) herausragt.

7. Kettenwirkmaschine nach Anspruch 6, **dadurch gekennzeichnet, dass** ein Drehgeber (16) am freien Ende (13) angeordnet ist.

8. Kettenwirkmaschine nach Anspruch 6 oder 7, **dadurch gekennzeichnet, dass** das freie Ende (13) mit einem Mustergetriebe (19) in Antriebsverbindung steht.

9. Kettenwirkmaschine nach Anspruch 8, **dadurch gekennzeichnet, dass** das freie Ende (13) über einen Zahnriemen (20) oder eine Kette mit dem Mustergetriebe (19) verbunden ist.

10. Kettenwirkmaschine nach einem der Ansprüche 1 bis 9, **dadurch gekennzeichnet, dass** der Antriebsmotor (6) eine Flüssigkeitskühlung aufweist.

11. Kettenwirkmaschine nach einem der Ansprüche 1 bis 10, **dadurch gekennzeichnet, dass** die Hauptwelle (2) mindestens einen ersten als Arbeitsabschnitt (3) ausgebildeten Abschnitt und einen zweiten als Endwelle (4) ausgebildeten Abschnitt aufweist, wobei der Antriebsmotor (6) mit der Endwelle (4) verbunden ist.

12. Kettenwirkmaschine nach einem der Ansprüche 1 bis 11, **dadurch gekennzeichnet, dass** der Antriebsmotor (6) als elektrischer Drehfeldmotor ausgebildet ist.

## Claims

1. Warp-knitting machine (1) having a main shaft (2) and a main-shaft drive which has a drive motor (6), wherein the main shaft (2) actuates at least one bar assembly, wherein the drive motor (6) is disposed so as to be coaxial with the main shaft (2), **characterized in that** the drive motor (6) is configured as a revolution-controlled motor, wherein the drive motor (6) has a rotor (8) which is fitted to the main shaft (2).

2. Warp-knitting machine according to Claim 1, **characterized in that** the main shaft (2) is disposed in a housing (12), and the drive motor (6) is fastened to an end side (11) of the housing (12), wherein the drive shaft (2) preferably protrudes through the end side (11).

3. Warp-knitting machine according to Claim 1 or 2, **characterized in that** the drive motor (6) is disposed in the midst of the longitudinal extent of the main shaft (2).

4. Warp-knitting machine according to one of Claims 1 to 3, **characterized in that** the drive motor (6) is configured as a bearing-free motor.

5. Warp-knitting machine according to one of claims 1 to 4, **characterized in that** the drive motor (6) is a sensor-less controlled motor.

6. Warp-knitting machine according to one of Claims 1 to 5, **characterized in that** the main shaft (2) enters the drive motor (6) at an axial end, and by way of a free end (13) protrudes from the drive motor (8) at the other end.

7. Warp-knitting machine according to Claim 6, **characterized in that** a rotary encoder (16) which is preferably configured as a noncontacting rotary encoder is disposed at the free end (13).

8. Warp-knitting machine according to Claim 6 or 7, **characterized in that** the free end (13) is in drive connection with a pattern gearbox (19).

9. Warp-knitting machine according to Claim 81, **characterized in that** the free end (13) is connected to the pattern gearbox (19) by way of a timing belt (20) or a chain.

10. Warp-knitting machine according to one of Claims 1 to 9, **characterized in that** the drive motor (6) has liquid cooling, in particular oil cooling.

11. Warp-knitting machine according to one of Claims 1 to 10, **characterized in that** the main shaft (2) has at least one first portion, configured as an operative portion (3), and one second portion, configured as an end shaft (4), wherein the drive motor (6) is connected to the end shaft (4).

12. Warp-knitting machine according to one of Claims 1 to 14, **characterized in that** the drive motor (6) is configured as an electric rotating field motor.

## Revendications

1. Métier à tricoter chaîne (1), pourvu d'un arbre principal (2) et d'un entraînement d'arbre principal, qui comporte un moteur d'entraînement (6), l'arbre principal (2) actionnant au moins un ensemble de barres, le moteur d'entraînement (6) étant placé de manière coaxiale à l'arbre principal (2),
**caractérisé en ce que** le moteur d'entraînement (6) est conçu sous la forme d'un moteur à régulation de vitesse, le moteur d'entraînement (6) comportant un rotor (8), qui est monté sur l'arbre principal (2).

2. Métier à tricoter chaîne selon la revendication 1, **caractérisé en ce que** l'arbre principal (2) est placé dans un carter (12) et **en ce que** le moteur d'entraînement (6) est fixé sur une face frontale (11) du carter (12).

3. Métier à tricoter chaîne selon la revendication 1 ou 2, **caractérisé en ce que** le moteur d'entraînement (6) est placé au milieu de l'extension longitudinale de l'arbre principal (2).

4. Métier à tricoter chaîne selon l'une quelconque des revendications 1 à 3, **caractérisé en ce que** le moteur d'entraînement (6) est conçu sous la forme d'un moteur sans palier.

5. Métier à tricoter chaîne selon l'une quelconque des revendications 1 à 4, **caractérisé en ce que** le moteur d'entraînement (6) est un moteur régulé sans capteur.

6. Métier à tricoter chaîne selon l'une quelconque des revendications 1 à 5, **caractérisé en ce que** l'arbre principal (2) pénètre par une extrémité axiale dans le moteur d'entraînement (6) et saillit par une extrémité libre (13) sur l'autre extrémité hors du moteur d'entraînement (6).

7. Métier à tricoter chaîne selon la revendication 6, **caractérisé en ce qu'**un encodeur rotatif (16) est placé sur l'extrémité libre (13).

8. Métier à tricoter chaîne selon la revendication 6 ou 7, caractérisé en ce l'extrémité libre (13) est en liaison par entraînement avec une commande de motif (19) .

9. Métier à tricoter chaîne selon la revendication 8, **caractérisé en ce que** l'extrémité libre (13) est reliée par l'intermédiaire d'une courroie dentée (20) ou d'une chaîne avec la commande de motif (19).

10. Métier à tricoter chaîne selon l'une quelconque des revendications 1 à 9, **caractérisé en ce que** le moteur d'entraînement (6) comporte un refroidissement par liquide.

11. Métier à tricoter chaîne selon l'une quelconque des revendications 1 à 10, **caractérisé en ce que** l'arbre principal (2) comporte au moins un premier segment conçu sous la forme d'un segment de travail (3) et un deuxième segment conçu sous la forme d'un arbre terminal (4), le moteur d'entraînement (6) étant relié avec l'arbre terminal (4).

12. Métier à tricoter chaîne selon l'une quelconque des revendications 1 à 11, **caractérisé en ce que** le moteur d'entraînement (6) est conçu sous la forme d'un moteur électrique à champ tournant.
